Europäisches Patentamt

European Patent Office

Office européen des brevets

(19)

(11) **EP 0 860 196 B1**

(12) **EUROPEAN PATENT SPECIFICATION**

(45) Date of publication and mention
of the grant of the patent:
**30.03.2005 Bulletin 2005/13**

(51) Int Cl.[7]: **B01D 53/50**, B01D 53/78,
B03C 3/02, B03C 3/76

(21) Application number: **98100990.5**

(22) Date of filing: **21.01.1998**

(54) **Flue gas treating process and apparatus**

Verfahren und Vorrichtung zur Rauchgasreinigung

Procédé et dispositif pour la purification de gaz de fumée

(84) Designated Contracting States:
**DE DK ES IT**

(30) Priority: **20.02.1997 JP 3615697**

(43) Date of publication of application:
**26.08.1998 Bulletin 1998/35**

(73) Proprietor: **Mitsubishi Heavy Industries, Ltd.
Tokyo 100-0005 (JP)**

(72) Inventors:
 • **Onizuka, Masakazu, Mitsubishi Heavy Ind. Ltd.
 Nishi-ku, Hiroshima-shi, Hiroshima-ken (JP)**
 • **Takashina, Toru, Mitsubishi Heavy Ind. Ltd.
 Nishi-ku, Hiroshima-shi, Hiroshima-ken (JP)**
 • **Okazoe, Kiyoshi, Mitsubishi Heavy Ind. Ltd.
 Tokyo (JP)**
 • **Katayama, Hiroyuki, Mitsubishi Heavy Ind. Ltd.
 Takasago-shi, Hyogo-ken (JP)**

(74) Representative: **Füchsle, Klaus, Dipl.-Ing. et al
Hoffmann Eitle,
Patent- und Rechtsanwälte,
Arabellastrasse 4
81925 München (DE)**

(56) References cited:
 WO-A-95/33547          US-A- 4 364 910
 US-A- 4 885 139        US-A- 5 427 608

 • DATABASE WPI Section Ch, Week 9803 Derwent
 Publications Ltd., London, GB; Class E36, AN
 98-027130 XP002065702 & JP 09 285 718 A
 (MITSUBISHI JUKOGYO KK) , 4 November 1997
 • PATENT ABSTRACTS OF JAPAN vol. 098, no.
 003, 27 February 1998 & JP 09 285718 A
 (MITSUBISHI HEAVY IND LTD), 4 November
 1997,
 • PATENT ABSTRACTS OF JAPAN vol. 097, no.
 002, 28 February 1997 & JP 08 252423 A
 (CHIYODA CORP), 1 October 1996,

EP 0 860 196 B1

**Description**

FIELD OF THE INVENTION AND RELATED ART STATEMENT

This invention relates to a flue gas treating process for removing sulfur oxides and dust from exhaust gas discharged from a boiler or the like, and an apparatus therefor.

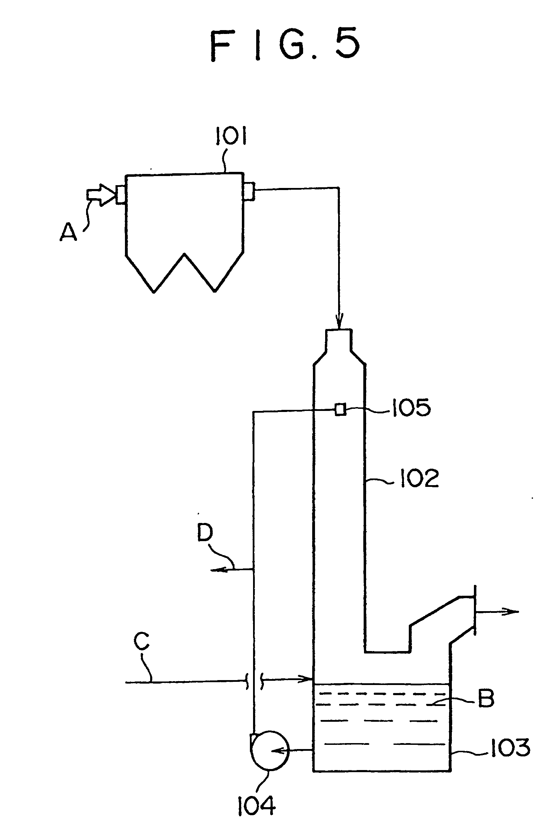

An example of a conventionally and commonly used process for removing sulfur oxides and dust from exhaust gas discharged from a boiler or the like is illustrated in FIG. 5. In FIG. 5, exhaust gas A discharged from a boiler or the like and containing sulfur oxides and dust is first introduced into a dry electrostatic precipitator 101, where dust is removed therefrom. Then, the exhaust gas A is generally treated in a wet desulfurization step using an absorption tower 102 in which the exhaust gas A is cleaned by bringing it into contact with an absorbing fluid B containing an alkaline agent C (e.g., limestone) that is held in a circulation tank 103, raised by means of a pump 104, and sprayed from a spray nozzle 105. Usually, most of the dust which was not collected in dry electrostatic precipitator 101, together with sulfur oxides, is removed in the wet desulfurization step, so that high overall dust-removing performance is achieved.

In recent years, with increasing attention to the problem of environmental protection, the concentration of dischargeable dust in exhaust gas tends to decrease. However, dry electrostatic precipitators are expensive equipment and, moreover, require a wide floor space. Consequently, it is desired to reduce the capacity of this equipment. However, since a reduction in the capacity of an electrostatic precipitator causes a loss in dust-removing performance, it is necessary to develop inexpensive and simple dust-removing equipment which can make up for such a loss in performance.

In view of the above-described circumstances of the prior art, it is an object of the present invention to provide a flue gas treating process which can achieve desulfurization and dust removal by use of simplified equipment and makes it possible to reduce the capacity of an electrostatic precipitator installed on the upstream side, as well as an apparatus therefor.

SUMMARY OF THE INVENTION

According to the present invention from one aspect, there is provided a flue gas treating process for removing sulfur oxides and dust from exhaust gas (A) containing sulfur oxides and dust by using an absorption tower into which an absorbing fluid (B) containing an alkaline agent is sprayed, wherein said absorption tower is equipped with integrally formed dust collection means having dust collecting plates and discharge electrodes, and with dust separation means for removing dust collected by said dust collection means; and the exhaust gas is treated in said dust collection means and subsequently cleaned in said absorption tower, whereby desulfurization and dust removal are effected while the collected dust is being removed by said dust separation means; said dust collection means imparting an electric charge to the dust passing therethrough, thus enhancing the dust-removing performance of the absorption tower.

According to the present invention from another aspect, there is also provided a flue gas treating apparatus comprising an absorption tower for desulfurizing exhaust gas (A) containing sulfur oxides and dust by first passing the gas through dust collecting means before bringing it into contact with an absorbing fluid (B) containing an alkaline agent, a circulation tank disposed at the bottom of said absorption tower for holding the absorbing fluid (B), and spray means for spraying the absorbing fluid (B) within said circulation tank into said absorption tower, wherein said dust collection means having dust collecting plates and discharge electrodes is installed in the upper part of said absorption tower, and said dust collection means is equipped with dust separation means for removing from said dust collection means said dust collected thereby; said dust collection means being arranged to impart an electric charge to the dust passing therethrough, thus enhancing the dust-removing performance of the absorption tower.

In one specific embodiment, the flue gas treating apparatus of the present invention comprises an absorption tower for desulfurizing exhaust gas containing sulfur oxides and dust by bringing it into contact with an absorbing fluid containing an alkaline agent, a circulation tank disposed at the bottom of the absorption tower for holding the absorbing fluid, and a circulating pump for raising the absorbing fluid from the circulation tank and spraying it into the absorption tower, wherein a simplified _____ electrostatic precipitator having dust collecting plates and discharge electrodes is installed in the upper part of the absorption tower, and the simplified electrostatic precipitator is equipped with a high-voltage power supply for energizing the simplified electrostatic precipitator, and a hammering device for sweeping off the dust collected by the simplified electrostatic precipitator.

In the practice of the present invention from a further aspect, an absorption tower equipped with dust collection means at the inlet thereof is used as the absorption tower for effecting wet desulfurization, and dust is enlarged and washed out in the absorption tower to improve dust-removing performance in the absorption tower. This makes it possible to decrease the load imposed on a dry electrostatic precipitator or like device installed upstream of the dust collection means and, as a result, reduce the size of the dry electrostatic precipitator or like device.

## BRIEF DESCRIPTION OF THE DRAWINGS

FIG. 1 is a schematic view illustrating an embodiment of the present invention;

FIG. 2 is a vertical sectional view illustrating an example of the dust collection means used in the present invention;

FIG. 3 is a schematic view illustrating an example of an electrode of the dust collection means used in the present invention;

FIG. 4 is a graph showing the results obtained by measuring dust-removing performance in the Example of the present invention while varying the applied current; and

FIG. 5 is a schematic view illustrating an example of a conventional flue gas treating process.

## DETAILED DESCRIPTION OF PREFERRED EMBODIMENTS

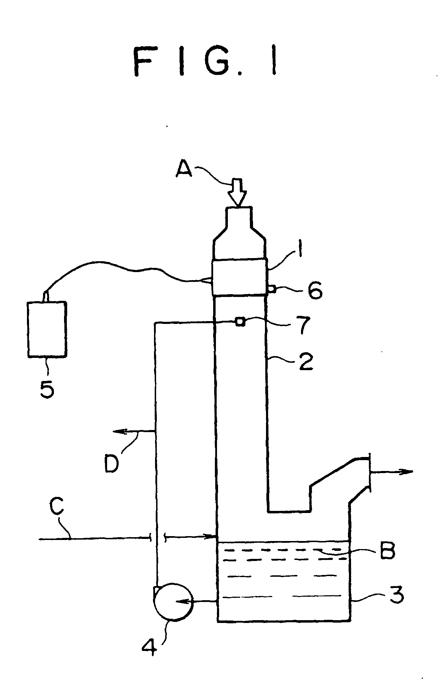

FIG. 1 is a schematic view illustrating an embodiment of the present invention. The apparatus illustrated in FIG. 1 is a flue gas treating apparatus comprising an absorption tower 2 for desulfurizing exhaust gas containing sulfur oxides and dust by bringing it into contact with an absorbing fluid B containing an alkaline agent, a circulation tank 3 disposed at the bottom of absorption tower 2 for holding the absorbing fluid B, a circulating pump 4 for raising the absorbing fluid B from circulation tank 3 to absorption tower 2 and spraying it into absorption tower 2, and a spray nozzle 7 for spraying the absorbing fluid B. This apparatus is also equipped, in the upper part thereof, with dust collection means 1 for primarily capturing dust on dust collecting plates by electrostatic force, coarsening the captured dust by aggregation, sweeping off the dust intermittently, and thereby removing the dust easily in absorption tower 2, and also for imparting an electric charge to the dust passing therethrough so as to enhance dust-removing performance by utilization of the image charges of droplets in absorption tower 2; and dust separation means 6 for sweeping off the dust collected by dust collection means 1.

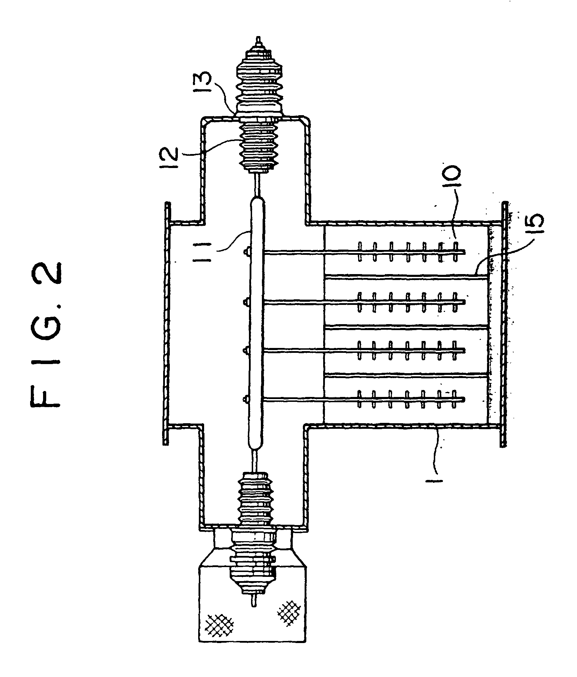

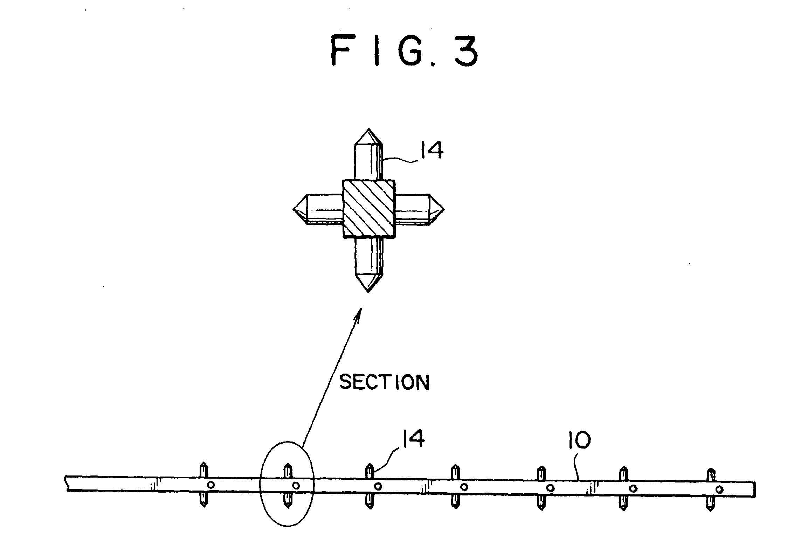

FIG. 2 is a vertical sectional view illustrating an example of dust collection means 1 used in the present invention. In this dust collection means 1, an electrode supporting rod 11 is held by insulators 12 fixed to insulator mounting plates 13, and a plurality of discharge electrodes 10 are attached to this electrode supporting rod 11. Moreover, dust collecting plates 15 are disposed so as to be opposite to discharge electrodes 10. As an example of discharge electrode 10, a barbed discharge electrode 10 having cross-shaped barbs 14 is illustrated in FIG. 3.

The flue gas treatment in the apparatus of FIG. 1 is carried out, for example, in the following manner. First of all, exhaust gas A containing sulfur oxides and dust is treated in dust collection means 1 disposed in the upper part of absorption tower 2 and energized by high-voltage power supply 5. Then, in absorption tower 2, exhaust gas A is cooled, desulfurized and dedusted by contact with an absorbing fluid B containing an alkaline agent C which fluid is raised from circulation tank 3 by means of pump 4 and sprayed from spray nozzle 7. In this process, some of the dust present in exhaust gas A is attracted to and captured by dust collecting plates 15. Moreover, since the dust passing therethrough is electrically charged, the dust can be more efficiently removed in absorption tower 2 on the basis of electric attraction caused by the image charges of the droplets of the absorbing fluid B pumped up and sprayed into absorption tower 2.

The dust collected by dust collection means 1 is kept on dust collecting plates 15 for a sufficient period of time to coarsen the dust by primary aggregation. Then, the dust is intermittently swept off into absorption tower 2 by hammering dust collection means 1 with dust separation means 6 at regular intervals. Since the fallen dust is in the form of coarse particles, it can be easily removed by washing in absorption tower 2.

An alkaline agent C comprising limestone or the like is supplied to circulation tank 3 in a stoichiometric amount required for desulfurization, and waste liquor D is withdrawn in a stoichiometric amount corresponding to the amount of the desulfurization products. The dust captured in absorption tower 2 is contained in waste liquor D at a concentration balanced with the stoichiometric amount of the desulfurization products and discharged together with them.

According to the above-described construction, dust present in exhaust gas is collected by the dust collection means disposed at the upper inlet of the absorption tower, the collected dust is kept on the dust collecting plates for a sufficient period of time to coarsen the dust by primary aggregation, and the coarsened dust is intermittently swept off by hammering the dust collection means at regular intervals. Thus, the fallen dust enters the absorption tower in the form of coarse particles and can be easily removed by washing in the absorption tower. Moreover, the dust passing through the dust collection means is electrically charged thereby and can hence be efficiently removed on the basis of electric attraction caused by the image charges of the droplets of the absorbing fluid B pumped up and sprayed into the absorption tower. That is, the dust collection means is a device which has neither ash hopper nor ash conveyor and which can only be installed in a small space in the upper part of the absorption tower to perform the functions of coarsening dust and imparting an electric charge thereto and thereby enhance dust-removing performance in the absorption tower. This dust collection means makes it possible to reduce the capacity of a dry electrostatic precipitator installed on the upstream side of the absorption tower and thereby bring about a marked cutdown in equipment cost.

EXAMPLE

An exhaust gas treating test was carried out by using an apparatus having the construction illustrated in FIG. 1. In this test, a simplified electrostatic precipitator 1 having a horizontal size of 60 cm x 60 cm and a height of about 1 m was used as the dust collection means. In FIG. 1, exhaust gas A having a flow rate of 10,000 m³N per hour was passed through simplified electrostatic precipitator 1 to collect dust present therein. Subsequently, exhaust gas A was cooled, desulfurized and dedusted in an absorption tower 2 having a horizontal size of 70 cm x 70 cm and a height of 7 m.

The properties of exhaust gas A passed through simplified electrostatic precipitator 1 were as shown in Table 1.

<u>Table 1</u>

```
  Inlet gas flow rate: 10,000 m³N/h

  Gas temperature: 90°C

  SOₓ concentration: 900 ppm

  Dust concentration: 60-70 mg/m³N
```

Simplified electrostatic precipitator 1 for collecting dust from exhaust gas A was energized by a high-voltage power supply 5 and intermittently hammered with a hammering device 6 used as the dust separation means. The dust swept off from simplified electrostatic precipitator 1 by hammering was treated in absorption tower 2 together with exhaust gas A. The operating conditions of simplified electrostatic precipitator 1 were as shown in Table 2.

<u>Table 2</u>

```
  Voltage: 37 kV

  Current: 15 mA

  Hammering intervals: 4 hours

  Hammering time: 5 minutes
```

After being treated by simplified electrostatic precipitator 1, exhaust gas A was passed through absorption tower 2 where it was cooled, desulfurized and dedusted by gas-liquid contact with an absorbing fluid B which was raised from a circulation tank 3 by means of a pump 4 at a flow rate of 200 m³ per hour and sprayed into absorption tower 2. An alkaline agent C comprising limestone was supplied to circulation tank 3 in a stoichiometric amount required for desulfurization, and waste liquor D was withdrawn in a stoichiometric amount corresponding to the amount of the desulfurization products. The dust captured in absorption tower 2 was contained in waste liquor D at a concentration balanced with the stoichiometric amount of the desulfurization products and discharged together with them. The temperature, SOₓ concentration and dust concentration of the exhaust gas cooled, desulfurized and dedusted in absorption tower 2 were as shown in Table 3.

## Table 3

```
Gas temperature: 48°C

SO_x concentration: 65-70 ppm

Dust concentration: 4.5-5 mg/m³N
```

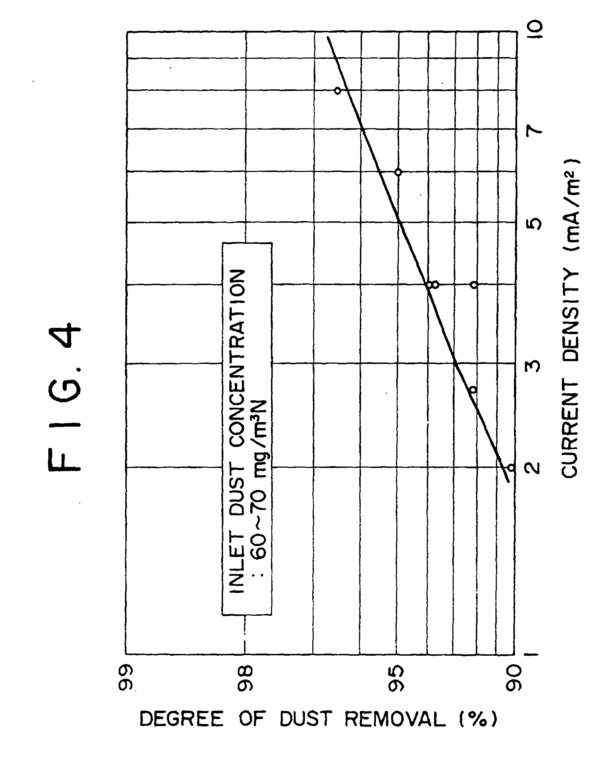

Simplified electrostatic precipitator 1 used in the above-described test had the construction shown in the vertical sectional view of FIG. 2. In this precipitator 1, a total of 16 barbed discharge electrodes 10 as illustrated in FIG. 3 were used. In each discharge electrode 10, seven sets of barbs arranged in a cross were disposed at intervals of 50 mm in the direction of flow of the gas, and the effective dust collecting length thereof was 350 mm. FIG. 4 shows the results obtained by measuring the dust-removing performance of simplified electrostatic precipitator 1 while varying the current density applied thereto. In FIG. 4, the current density on the abscissa is a value obtained by dividing the applied current by the effective dust collecting area of dust collecting plates 15 which was assumed to be 3.7 $m^2$.

It can be seen from the results of the above-described example that the dust concentration at the inlet of absorption tower 2 can be increased by equipping the inlet of absorption tower 2 with simplified electrostatic precipitator 1 and, in consequence, the size of a dust collector installed upstream of simplified electrostatic precipitator 1 can be reduced. A more detailed explanation is offered on this point. Generally, a measure of the performance of an electrostatic precipitator is given by the following equation.

$$\eta = 1 - \exp(- \frac{vA}{Q})$$

where

   $\eta$: Degree of dust removal
   v: Traveling speed of dust particles (m/sec)
   A: Dust collecting area ($m^2$)
   Q: flow rate of gas ($m^3$/sec)

For example, when the dust concentration at the inlet of a dry electrostatic precipitator installed upstream of a desulfurizer is 1 $g/m^3N$, it has been required in the prior art to reduce the dust concentration at the outlet of the dry electrostatic precipitator (i.e., at the inlet of the desulfurizer) to 30 $mg/m^3N$. However, by using the apparatus of the present invention, exhaust gas can be treated even at a dust concentration of as high as 70 $mg/m^3N$. Then, on the assumption that v = 0.2 m/sec and Q = 500 $m^3$/sec, a dust collecting area of about 8,800 $m^2$ has been required in the prior art, but the present invention makes it possible to decrease the dust collecting area to about 6,700 $m^2$. This corresponds to an about 30% reduction in size.

## Claims

1.   A flue gas treating process for removing sulfur oxides and dust from exhaust gas (A) containing sulfur oxides and dust by using an absorption tower (2) into which an absorbing fluid (B) containing an alkaline agent is sprayed, wherein said absorption tower (2) is equipped with integrally formed dust collection means (1) having dust collecting plates (15) and discharge electrodes (10), and with dust separation means (6) for removing dust collected by said dust collection means (1); and the exhaust gas is treated in said dust collection means (1) and subsequently cleaned in said absorption tower (2), whereby desulfurization and dust removal are effected while the collected dust is being removed by said dust separation means (6); said dust collection means (1) imparting an electric charge to the dust passing therethrough, thus enhancing the dust-removing performance of the absorption tower (2).

2.   A flue gas treating apparatus comprising an absorption tower (2) for desulfurizing exhaust gas (A) containing sulfur oxides and dust by first passing the gas through dust collecting means before bringing it into contact with an absorbing fluid (B) containing an alkaline agent, a circulation tank (3) disposed at the bottom of said absorption tower (2) for holding the absorbing fluid (B), and spray means (7) for spraying the absorbing fluid (B) within said circulation tank (3) into said absorption tower (2), wherein said dust collection means (1) having dust collecting plates (15) and discharge electrodes (10) is installed in the upper part of said absorption tower (2), and said dust collection means (1) is equipped with dust separation means (6) for removing from said dust collection means (1) said dust collected thereby; said dust collection means (1) being arranged to impart an electric charge to the dust passing therethrough, thus enhancing the dust-removing performance of the absorption tower (2).

3. A flue gas treating apparatus according to claim 2, wherein a circulating pump (4) is arranged to raise the absorbing fluid (B) from said circulation tank (3) to said spray means (7) and said dust collection means (1) comprises an electrostatic precipitator having dust collecting plates (15) and discharge electrodes (10) and is installed in the upper part of said absorption tower (2), and said electrostatic precipitator is equipped with a high-voltage power supply (5) for energizing said electrostatic precipitator, and a hammering device (6) for removing said dust collected by said electrostatic precipitator.

**Patentansprüche**

1. Abgas-Behandlungsverfahren zum Entfernen von Schwefeloxiden und Staub auf einem Abgas (A), welches Schwefeloxide und Staub enthält, unter Verwendung eines Absorptionsturms (2), in den eine Absorptionsflüssigkeit (B), die ein alkalisches Agens enthält, besprüht wird, wobei dieser Absorptionsturm (2) mit integral ausgeformten Staub-Sammelelementen (1), die Staub-Sammelplatten (15) sowie Entladungselektroden (10) aufweisen, sowie mit Staub-Separationselementen (6) zum Entfernen von durch die Staub-Sammelelemente (1) gesammeltem Staub, ausgerüstet ist; und das Abgas in den Staub-Sammelelementen (1) behandelt und nachfolgend in dem Absorptionsturm (2) gereinigt wird, wodurch die Entschwefelung sowie die Staubentfernung bewirkt werden, während der gesammelte Staub durch das Staub-Separationselement (6) entfernt wird, die Staub-Sammelelemente (1) eine elektrische Ladung auf den hier hindurchtretenden Staub aufbringen, wodurch die Staub-Entfernungs-Leistung des Absorptionsturms (2) erhöht wird.

2. Abgas-Behandlungsvorrichtung, umfassend einen Absorptionsturm (2) zum Entschwefeln von Abgas (A), welches Schwefeloxide und Staub enthält, durch ein erstes Durchführen des Gases durch Staub-Sammelelemente, bevor es in Kontakt mit einer Absorptionsflüssigkeit (B) gebracht wird, welche ein alkalisches Agens enthält, einem Zirkulationstank (3), der am Boden des Absorptionsturms (2) zum Halten der Absorptionsflüssigkeit (B) angeordnet ist, sowie Sprühelementen (7) zum Sprühen der Absorptionsflüssigkeit (B) innerhalb des Zirkulationstanks (3) in den Absorptionsturm (2), wobei das Staub-Sammelelement (1) Staub-Sammelplatten (15) und Entladungselektroden (10) aufweist, in dem oberen Teil des Absorptionsturms (2) angebracht ist, und das Staub-Sammelelement (1) mit Staub-Separationselementen (6) zum Entfernen des dadurch gesammelten Staubs von dem Staub-Sammelelement (1) ausgestattet ist; wobei die Staub-Sammelelemente (1) so angeordnet sind, dass sie eine elektrische Ladung auf den hierdurch hindurchtretenden Staub aufbringen, wodurch die Staub-Entfernungs-Leistung das Absorptionsturms (2) erhöht wird.

3. Abgas-Behandlungsvorrichtung gemäß Anspruch 2, wobei eine Zirkulationspumpe (4) angeordnet ist, um die Absorptionsflüssigkeit (B) von dem Zirkulationstank (3) zu den Sprühelementen (7) anzuheben, und das Staub-Sammelelement (1) einen elektrostatischen Abscheider, der Staub-Sammelplatten (15) und Entladungselektroden (10) aufweist und in dem oberen Teil des Absorptionsturms (2) angebracht ist, aufweist, und wobei dieser elektrostatische Abscheider mit einer Hochspannungs-Energiezufuhr (5) zum Versorgen des elektrostatischen Abscheiders mit Energie ausgestattet ist, sowie einer Schlagvorrichtung (6) zum Entfernen des durch den elektrostatischen Abscheider gesammelten Staubs.

**Revendications**

1. Dispositif de traitement des gaz de fumée destiné à éliminer des oxydes de soufre et de la poussière des gaz brûlés (A) contenant des oxydes de soufre et de la poussière en utilisant une colonne d'absorption (2) dans laquelle un fluide d'absorption (B) contenant un agent alcalin est pulvérisé, où ladite colonne d'absorption (2) est équipée d'un moyen de récupération de la poussière intégré (1) comportant des plaques de récupération de poussière (15) et d'électrodes à décharge (10), et d'un moyen de séparation de poussière (6) destiné à éliminer la poussière recueillie par ladite colonne de récupération de poussière (1), et les gaz brûlés sont traités dans ledit moyen de récupération de poussière (1) et nettoyés ensuite dans ladite colonne d'absorption (2), grâce à quoi la désulfuration et l'élimination de poussière sont effectuées alors que la poussière recueillie est éliminée par ledit moyen de séparation de poussière (6), ledit moyen de récupération de poussière (1) transmettant une charge électrique à la poussière qui le traverse, en améliorant ainsi la performance d'élimination de poussière de la colonne d'absorption (2).

2. Dispositif de traitement des gaz de fumée comprenant une colonne d'absorption (2) destinée à désulfurer les gaz brûlés (A) contenant des oxydes de soufre et de la poussière d'abord par un passage du gaz au travers du moyen de récupération de poussière avant de l'amener en contact avec le fluide d'absorption (B) contenant un agent alcalin, un réservoir de circulation (3) disposé en bas de la colonne d'absorption (2) destiné à contenir le fluide d'absorption (B), et un moyen de pulvérisation (7) destiné à pulvériser le fluide d'absorption (B) à l'intérieur dudit réservoir de circulation (3) dans ladite colonne d'absorption (2), où ledit moyen de récupération de poussière (1) comprenant des plaques de récupération de poussière (15) et des électrodes à décharge (10) est installé dans la partie supérieure de ladite colonne d'absorption (2), et ledit moyen de récupération de poussière (1) est équipé d'un moyen de séparation de poussière (6) destiné à éliminer dudit moyen de récupération de poussière (1) ladite poussière recueillie par celui-ci, ledit moyen de récupération de poussière (1) étant agencé pour transmettre une charge électrique à la poussière qui le traverse, en améliorant ainsi la performance d'élimination de poussière de la colonne d'absorption (2).

3. Dispositif de traitement des gaz de fumée selon la revendication 2, dans lequel une pompe de circulation (4) est agencée pour faire remonter le fluide d'absorption (B) dudit réservoir de circulation (3) vers ledit moyen de pulvérisation (7) et ledit moyen de récupération de poussière (1) comprend un dépoussiéreur électrostatique comportant des plaques de récupération de poussière (15) et des électrodes à décharge (10) et est installé dans la partie supérieure de ladite colonne d'absorption (2), et ledit dépoussiéreur électrostatique est équipé d'une alimentation à très haute tension (5) destinée à alimenter ledit dépoussiéreur électrostatique, et un dispositif de martèlement (6) destiné à éliminer ladite poussière recueillie par ledit dépoussiéreur électrostatique.

# F I G. I

F I G. 2

FIG. 3

# F I G. 4

DEGREE OF DUST REMOVAL (%)

99

98

95

90

INLET DUST CONCENTRATION
: 60~70 mg/m³N

1          2      3          5      7      10

CURRENT DENSITY (mA/m²)

EP 0 860 196 B1

# F I G. 5